# EUROPÄISCHE PATENTSCHRIFT

(11) **EP 2 392 492 B1**
(45) Veröffentlichungstag und Bekanntmachung des Hinweises auf die Patenterteilung: **16.01.2013**
(21) Anmeldenummer: 11166491.8
(22) Anmeldetag: 18.05.2011
(51) Int. Cl.: B60P 1/44, B62D 33/027

(54) **Hubladebühne und Verfahren zum Betreiben einer Steuereinrichtung einer Hubladebühne**
Cantilever lift and method for operating a control device of a cantilever lift
Plate-forme de chargement et procédé pour le fonctionnement d'un dispositif de commande d'une plate-forme de chargement

(30) Priorität: 07.06.2010 DE 102010023838
(43) Veröffentlichungstag der Anmeldung: 07.12.2011
(73) Patentinhaber: Gerd Bär GmbH, 74078 Heilbronn (DE)
(72) Erfinder: Bär, Tobias, Dipl.-Wi-Ing, 74078 Heilbronn (DE); Lohmann, Christoph, 74172 Neckarsulm (DE)
(74) Vertreter: Dreiss

(56) Entgegenhaltungen:
- DE-A1- 3 333 132
- DE-A1- 19 756 310
- US-A1- 2009 240 402

## Beschreibung

Die Erfindung betrifft eine Hubladebühne für den Anbau vorzugsweise an den Heckbereich eines Fahrzeugs, beispielsweise eines Landfahrzeugs oder eines Wasserfahrzeugs, mit den Merkmalen des Oberbegriffs des Anspruchs 1. Die Erfindung betrifft außerdem ein Verfahren zum Betreiben einer elektrischen oder elektronischen Steuereinrichtung einer solchen Hubladebühne.

Hubladebühnen dieser Art sind allgemein bekannt (DE19756310). Es ist insbesondere bekannt, im Elektromotor der bekannten Hubladebühne einen Thermoschalter vorzusehen, der öffnet, wenn eine Temperatur des Elektromotors einen gewissen Schwellwert erreicht oder überschreitet, und hierdurch eine Bestromung des Elektromotors bei einer zu hohen Temperatur unterbindet. Hierdurch wird ein Schutz des Elektromotors vor einer thermischen Überlastung erreicht.

Trotz der bekannten Temperatursicherung kann der sichere und zuverlässige Betrieb der Hubladebühne nur dann sichergestellt sein, wenn die Hubladebühne einen Elektromotor aufweist, der eine für den Betrieb mit der Hubladebühne vorgesehene Bauart aufweist. Wird beispielsweise bei Wartungs- oder Reparaturarbeiten an der Hubladebühne ein Elektromotor eines falschen Typs in die Hubladebühne eingebaut, kann nicht gewährleistet werden, dass die Hubladebühne sicher und zuverlässig arbeitet.

Die Aufgabe der vorliegenden Erfindung besteht darin, eine Hubladebühne anzugeben, bei der ein unsicherer und/oder unzuverlässigerer Betrieb zumindest weitgehend vermieden wird. Ferner soll ein entsprechendes Verfahren zum Betreiben einer Steuereinrichtung der Hubladebühne angegeben werden.

Die Aufgabe wird durch eine Hubladebühne mit den Merkmalen des Anspruchs 1 gelöst.

Hierbei kann vorgesehen werden, dass die Steuereinrichtung so ausgebildet ist, dass sie in Abhängigkeit von dem Signal zunächst den mindestens einen temperaturabhängigen Parameter, der von elektrischen Eigenschaften des Bauteils abhänget, ermittelt und eine Bestromung des Elektromotors durch Ansteuerung eines Leistungsschalters nur zulässt, wenn das Überprüfen ergibt, dass der Parameter innerhalb des vorbestimmten Wertebereichs liegt.

Hierdurch wird erreicht, dass einerseits der Elektromotor niemals bestromt wird, wenn der Parameter außerhalb des Wertebereichs liegt, und andererseits dass die Steuereinrichtung die Temperatur des Elektromotors zumindest grob ermitteln kann. Die Erfindung ermöglicht somit gleichzeitig die Erkennung des Typs des Elektromotors und einen Temperaturschutz.

Der Erfindung liegt der Gedanke zugrunde, dass der Wertebereich, den der Parameter annehmen kann, von der Beschaffenheit des Bauteils abhängt, die wiederum vom Typ des Elektromotors abhängt. Wird ein Elektromotor des falschen Typs in die Hubladebühne eingebaut, dann weist dieser entweder überhaupt kein elektrisches Bauteil oder ein falsches elektrisches Bauteil, das heißt ein elektrisches Bauteil, dessen Parameter jedenfalls bei einer zulässigen Temperatur außerhalb des vorbestimmten Wertebereichs liegt, auf.

Es ist besonders bevorzugt, dass das temperaturabhängige Bauteil einen temperaturabhängigen Widerstand und/oder zwei temperaturabhängige Schaltelemente umfasst. Weist das Bauteil den temperaturabhängigen Widerstand auf, dann charakterisiert das Signal einen kontinuierlichen Parameter, der von einem Widerstandwert des temperaturabhängigen Widerstands abhängt oder diesem entspricht. Befindet sich dieser Parameter außerhalb des zulässigen Bereichs - was insbesondere der Fall ist, wenn ein Elektromotor des falschen Typs in die Hubladebühne eingebaut ist - dann lässt das Steuergerät die Bestromung des Elektromotors nicht zu.

Weist das Bauteil die beiden temperaturabhängigen Schaltelemente auf, dann charakterisiert das mindestens eine Signal als Parameter die momentanen, temperaturabhängigen Schaltzustände dieser Schaltelemente. Es handelt sich somit um einen diskreten Parameter, der für den Fall von genau zwei Schaltelementen vier Werte annehmen kann. Vorzugsweise entsprechen die Schaltzustände, für die der Elektromotor des für den Betrieb in der Hubladebühne vorgesehenen Typs eine zulässige Temperatur aufweist, dem vorbestimmten Wertebereich. Insbesondere kann in einer bevorzugten Ausführungsform genau ein Schaltzustand dem vorbestimmten Wertebereich entsprechen.

Es ist bevorzugt, dass der temperaturabhängige Widerstand bzw. die temperaturabhängige Schaltelemente so ausgebildet sind, dass der Parameter sich im vorbestimmten Wertebereich befindet, wenn der Elektromotor und somit auch der temperaturabhängige Widerstand bzw. die Schaltelement eine für den Betrieb des Elektromotors zulässige Temperatur aufweisen. Wird der Elektromotor nach einer längeren Pause in Betrieb genommen, dann hat er in den meisten Fällen die zulässige Temperatur und der Parameter befindet sich im vorgegebenen Wertebereich. Ein in die Hubladebühne eingebauter Elektromotor des falschen Typs führt bei zulässiger Temperatur dazu, dass sich der Parameter außerhalb des vorbestimmten Wertebereichs befindet, was von der Steuereinrichtung erkannt wird.

Erfindungsgemäß ist die Steuereinrichtung so ausgebildet, dass sie unabhängig von der Umgebungstemperatur am Elektromotor oder der Temperatur des Elektromotors anhand des Parameters einen nicht geeigneten Elektromotor, das heißt einen Elektromotor eines für den Betrieb mit der Hubladebühne ungeeigneten Typs, erkennt und die Bestromung des Elektromotors sperrt. Die Funktion der Temperaturüberwachung beziehungsweise des Schutzes vor thermischer Überlastung des Elektromotors ist somit unabhängig von der Funktion des Erkennens des geeigneten beziehungsweise nicht geeigneten Elektromotors. Ist ein geeigneter Elektromotor in die Hubladebühne eingebaut, dann liegt der Parameter unabhängig von der Umgebungstemperatur am Elektromotor stets innerhalb des vorbestimmten Wertebereichs, und die Steuereinrichtung erkennt, dass ein geeigneter Elektromotor in die Hubladebühne eingebaut ist. Ist ein ungeeigneter Elektromotor eingebaut, dann liegt der Parameter außerhalb des vorbestimmten Wertebereichs, und die Steuereinrichtung erkennt unabhängig von der momentanen Temperatur, dass ein ungeeigneter Elektromotor in die Hubladebühne eingebaut ist.

Als temperaturabhängiger Widerstand kann jedes elektrische Bauteil vorgesehen werden, dessen ohmscher Widerstand von der Temperatur abhängt. Somit kann beispielsweise auch ein Halbleiterbauelement oder eine Halbleiterschaltung einen temperaturabhängigen Widerstand bilden. Bevorzugt ist jedoch, dass es sich bei dem temperaturabhängigen Widerstand um einen PTC oder einen NTC handelt.

Alternativ oder ergänzend hierzu kann vorgesehen werden, dass das temperaturabhängig elektrische Bauteil eine Spule aufweist und dass der Parameter eine Induktivität der Spule charakterisiert. Das heißt, es kann als Parameter lediglich die Induktivität vorgesehen sein. Es ist jedoch auch denkbar, dass zwei Parameter zur Identifikation des Elektromotors herangezogen werden, nämlich der Widerstandswert des temperaturabhängigen Widerstands und die Induktivität der Spule. Hierdurch können geeignete Elektromotoren von ungeeigneten Elektromotoren noch zuverlässiger unterschieden werden. Sind zwei Parameter vorgesehen, dann ergeben sich mehr Codiermöglichkeiten für verschiedene Typen von Elektromotoren, so dass der geeignete Elektromotor als solcher auch dann zuverlässig erkannt werden kann, wenn relativ viele unterschiedliche Typen des Elektromotors existieren.

Es kann vorgesehen werden, dass das temperaturabhängige elektrische Bauteil einen Kondensator aufweist und dass der Parameter eine Kapazität des Kondensators charakterisiert. Hierbei ist denkbar, als weiteren Parameter den Widerstandswert des temperaturabhängigen Widerstands heranzuziehen, so dass sich insgesamt zwei Parameter ergeben. Hierdurch ergibt sich wiederum eine zuverlässige Unterscheidungsmöglichkeit zwischen einem geeigneten und einem nicht geeigneten Elektromotor bei einer relativ hohen Anzahl an Codiermöglichkeiten.

Um einen einfachen Aufbau einer elektrischen Installation der Hubladebühne zu erreichen, ist bevorzugt, dass das temperaturabhängige Bauteil ein Zweipol ist und/oder mit einem Versorgungsanschluss des Elektromotors und mit dem Messanschluss verbunden ist. Der Elektromotor braucht somit außer seinen ohnehin vorhandenen Versorgungsanschlüssen nur noch einen zusätzlichen Anschluss, nämlich den Messanschluss, aufweisen.

Andererseits kann auch vorgesehen werden, dass das temperaturabhängige Bauteil ein Zweipol ist und/oder mit zwei verschiedenen Messanschlüssen des Elektromotors verbunden ist. Bei einer solchen Ausgestaltung der Hubladebühne kann der mindestens eine Parameter einfacher und genauer ermittelt werden.

Als weitere Lösung der oben genannten Aufgabe wird ein Verfahren zum Betreiben einer elektrischen oder elektronischen Steuereinrichtung einer Hubladebühne mit den Merkmalen des Anspruchs 9. Hierbei ist bevorzugt, dass nach dem Erfassen des Signals mindestens ein Parameter des Bauteils, der elektrische Eigenschaften des Bauteils charakterisiert, in Abhängigkeit von dem Signal ermittelt wird, überprüft wird, ob der mindestens eine Parameter innerhalb des vorbestimmten Wertebereichs liegt und eine Bestromung des Elektromotors durch Ansteuern eines Leistungsschalters nur dann zugelassen wird, wenn der Parameter innerhalb des Wertebereichs liegt. Die Steuereinrichtung kann einen zum Ausführen des Verfahrens programmierten Mikrocomputer, vorzugsweise einen zum Ausführen des Verfahrens programmierten Mikrocontroller, aufweisen.

Ein solches Verfahren ermöglicht in der oben beschriebenen Weise die Erkennung eines geeigneten beziehungsweise eines nicht geeigneten Elektromotors. Gleichzeitig kann die Umgebungstemperatur am Elektromotor zumindest grob ermittelt werden.

Es ist bevorzugt, dass das Signal erfasst wird, der mindestens eine Parameter ermittelt wird und/oder überprüft wird, ob der Parameter innerhalb des vorbestimmten Wertebereichs liegt, wenn - beispielsweise von einem Benutzer der Hubladebühne - ein Bedienelement der Hubladebühne zum Verstellen der Lage der Plattform betätigt wird und/oder zum Verstellen der Lage der Plattform die Hydraulikpumpe vom Elektromotor angetrieben werden muss. In einer Ausführungsform muss der Elektromotor zum Befüllen der Hydraulikzylinder angetrieben werden; dies ist bei dieser Ausführungsform beispielweise beim Anheben der Plattform oder beim Neigen der Plattform zum Verschließen einer Ladeöffnung des Fahrzeugs der Fall.

Die Vorteile der erfindungsgemäßen Hubladebühne können mittels des erfindungsgemäßen Verfahrens realisiert werden, wenn mit dem Verfahren die erfindungsgemäße Hubladebühne nach einem der Ansprüche 1 bis 8 betrieben wird.

Weitere Merkmale und Vorteile der Erfindung ergeben sich aus der nachfolgenden Beschreibung, in welcher exemplarische Ausführungsformen der Erfindung anhand der Zeichnungen näher erläutert werden. Dabei zeigen:
- Figur 1: eine schematische Darstellung einer Hubladebühne;
- Figur 2: ein Prinzipschaltbild einer Hubladebühne gemäß einer ersten Ausführungsform;
- Figur 3: Kenlinien von Widerstandswerten temperaturabhängiger Bauteile eines Elektromotors der Hubladebühne;
- Figur 4: ein Prinzipschaltbild einer Hubladebühne gemäß einer zweiten Ausführungsform;
- Figur 5: ein Prinzipschaltbild einer Hubladebühne gemäß einer dritten Ausführungsform;
- Figur 6: ein Prinzipschaltbild einer Hubladebühne gemäß einer vierten Ausführungsform;
- Figur 7: ein Prinzipschaltbild einer Hubladebühne gemäß einer fünften Ausführungsform; und
- Figur 8: ein Ausschnitt eines Prinzipschaltbilds einer Hubladebühne gemäß einer sechsten Ausführungsform.

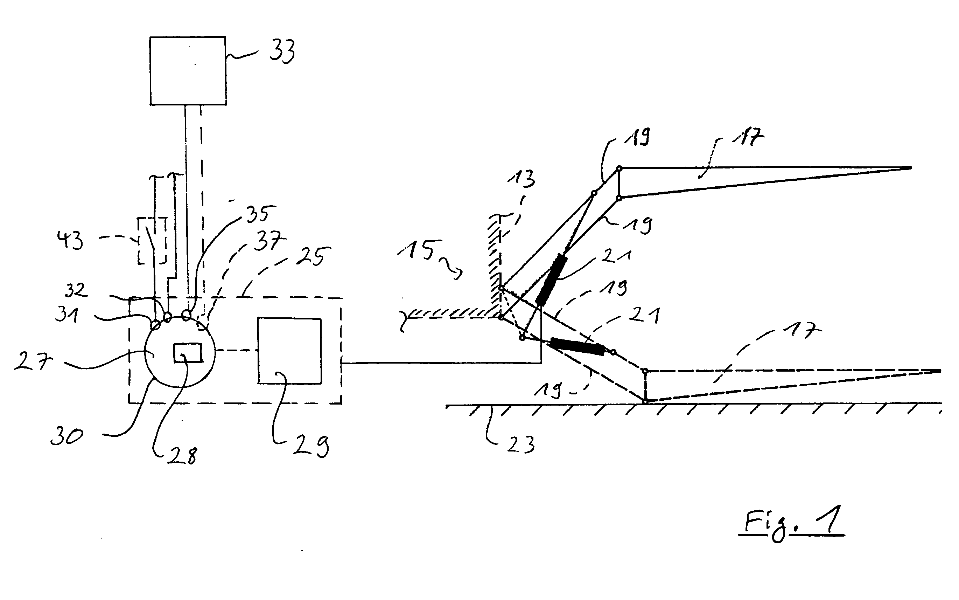

Figur 1 zeigt eine Hubladebühne 11, die an einem Heckbereich 13 eines Kraftfahrzeugs 15, beispielsweise eines Lastkraftfahrzeugs, angebaut ist. Abweichend von der gezeigten Ausführungsform kann es sich bei dem Fahrzeug auch um ein Wasserfahrzeug, insbesondere um ein Schiff, handeln. Ferner kann die Hubladebühne 11 auch an einem anderen Bereich des Fahrzeugs als den Heckbereich 13 angeordnet sein. Beispielsweise kann die Hubladebühne 11 an einem seitlichen Bereich des Fahrzeugs, insbesondere des Kraftfahrzeugs oder Lastkraftfahrzeugs, angebaut sein.

Eine Plattform 17 der Hubladebühne 11 ist von zumindest näherungsweise parallel verlaufenden Tragarmen 19 so gehalten, dass sie mittels Hubzylindern 21 heb- und senkbar ist, wobei sie bei Betätigung der Hubzylinder 21 einen Winkel gegenüber der Horizontalen beibehält. In Figur 1 ist die Plattform 17 mitsamt den Tragarmen 19 und den Hubzylindern 21 mit durchgezogenen Linien in einer gegenüber einer Grundfläche 23, auf der das Kraftfahrzeug 15 abgestellt ist, angehobenen Lage dargestellt. Die gestrichelte Darstellung zeigt die auf die Grundfläche 23 abgesenkte Plattform 17 und die entsprechende Lage der Tragarme 19 und der Hubzylinder 21. Die Plattform 17 ist in allen erreichbaren Hubstellungen in der Horizontalen haltbar.

Zur Betätigung der Hubzylinder 21 weist die Hubladebühne 11 ein Hydraulikaggregat 25 mit einer von einem insbesondere als Gleichstrommotor ausgebildeten Elektromotor 27 angetriebenen Hydraulikpumpe 29 auf. Der Elektromotor 27 weist zwei Versorgungsanschlüsse 31, 32 zum Anschluss des Elektromotors 27 an eine Versorgungsspannung auf. Einer der Versorgungsanschlüsse 31 und ein Messanschluss 35 des Elektromotors 27 sind an eine elektronische Steuereinrichtung 33 angeschlossen. Bei dem Elektromotor 27 kann es sich um einen Reihenschlussmotor oder einen Nebenschlussmotor handeln. In einer nicht gezeigten Ausführungsform weist der Elektromotor 27 mehr als zwei Versorgungsanschlüsse 31 auf; beispielsweise können Anschlüsse von Stator- und Ankerwicklungen getrennt voneinander über die Versorgungsanschlüsse 31 aus dem Elektromotor 27 herausgeführt werden.

In den Elektromotor 27 ist ein temperaturabhängiges Bauteil 28 integriert. In der gezeigten Ausführungsform befindet sich dieses Bauteil 28 im Inneren eines Gehäuses 30 des Elektromotors 27. Vorzugsweise ist das Bauteil 28 derart im Elektromotor 27 angeordnet, dass mittels des Bauteils 28 die Temperatur von Teilen des Elektromotors 27 erfasst werden kann, die sich beim Betrieb des Elektromotors 27 relativ stark erwärmen. Beispielsweise kann das Bauteil 28 an einer Wicklung des Elektromotors 27 angeordnet sein. Es kann vorgesehen sein, dass das Bauteil 28 derart mit den anderen Teilen des Elektromotors 27 verbunden ist, dass es nicht zerstörungsfrei demontierbar ist.

In der schematischen Seitenansicht der Figur 1 ist lediglich ein Hubzylinder 21 dargestellt. Vorzugsweise weist die Hubladebühne 11 jedoch zwei Hubzylinder auf. Darüber hinaus kann die Hubladebühne 11 zusätzlich einen, vorzugsweise zwei, Neigezylinder aufweisen, mittels deren der Winkel der Plattform 17 gegenüber der Horizontalen veränderbar ist.

Die Neigezylinder sind genauso wie die Hubzylinder 21 mit dem Hydraulikaggregat 25 verbunden, so dass sie von diesem betätigt werden können. Außer dem Messanschluss 35 kann der Elektromotor 27 auch einen weiteren Messanschluss 37 aufweisen.

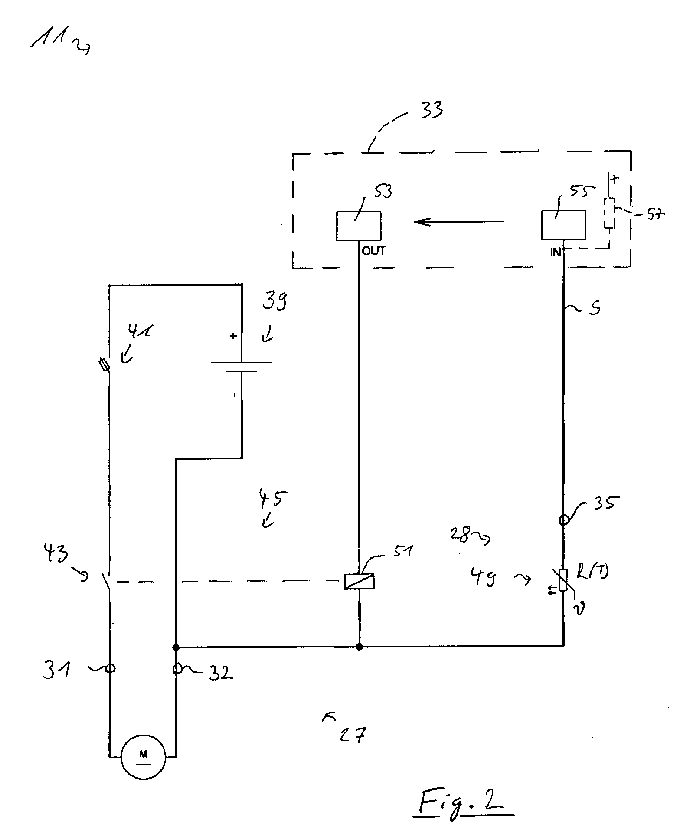

Figur 2 zeigt einen Stromlaufplan einer Hubladebühne 11 gemäß einer ersten Ausführungsform. Der Pluspol einer Batterie 39 ist über eine Sicherung 41 und einem Schaltelement 43 eines als Relais 45 ausgeführten Leistungsschalters an den ersten Versorgungsanschluss 31 des Elektromotors 27 angeschlossen. Der zweite Versorgungsanschluss 32 des Elektromotors 27 ist mit einem Minuspol der Batterie 39 verbunden.

Wicklungen des Elektromotors 27 sind zwischen den beiden Versorgungsanschlüssen 31, 32 angeordnet. Zwischen dem Messanschluss 35 des Elektromotors 27 und dem zweiten Versorgungsanschluss 32 ist als temperaturabhängiges Bauteil 28 ein temperaturabhängiger Widerstand 49 angeordnet. Die Wicklungen des Elektromotors 27 sowie der temperaturabhängige Widerstand 49 sind in dem gemeinsamen Gehäuse 30 des Elektromotors 27 angeordnet. Die Anschlüsse 31, 32 und 35 sind als Anschlussklemme am Gehäuse 30 des Elektromotors 27 ausgebildet. In der gezeigten Ausführungsform weist der Elektromotor 27 somit drei Anschlussklemmen 31, 32, 35 auf, wobei der zweite Anschluss 32 einen Minuspol des Elektromotors bildet, an dem sowohl die Wicklungen des Elektromotors 27 als auch der temperaturabhängige Widerstand 49 angeschlossen sind.

Eine Spule 51 des Relais 45 zum Betätigen des als Schließer ausgebildeten Schaltelements 43 ist mit einem Anschluss an einen Ausgang 53 der Steuereinrichtung 33 und mit einem anderen Anschluss an den Minuspol der Batterie 39 angeschlossen. Der Messanschluss 35 des Elektromotors 27 ist mit einem als Analogeingang ausgeführten Messeingang 55 der Steuereinrichtung 33 verbunden. Die Steuereinrichtung 33 kann zu ihrer Energieversorgung mit den beiden Polen der Batterie 39 verbunden sein. Insbesondere kann in der Steuereinrichtung 33 ein Widerstand 57 vorgesehen sein, der den Messeingang 55 mit dem Pluspol der Batterie 39 verbindet, so dass der Widerstand 57 und der temperaturabhängige Widerstand 49 einen zwischen den beiden Polen der Batterie 39 angeordneten Spannungsteiler bilden, dessen Mittelabgriff mit dem Messeingang 55 verbunden ist.

Beim Betrieb der Hubladebühne 11 aktiviert die Steuereinrichtung durch Ansteuern der Spule 51 und somit durch Schließen des Schaltelements 43 den Elektromotor 27 des Hydraulikaggregats 25, falls ein oder mehrere Hydraulikzylinder der Hubladebühne 11, beispielsweise die Hubzylinder 21 betätigt werden sollen und die Steuereinrichtung 33 erkannt hat, dass der Elektromotor 27 von einem für den Betrieb in der Hubladebühne 11 geeigneten Typ ist. Eine Ventileinrichtung (nicht gezeigt) des Hydraulikaggregats 25 legt fest, in welchem Hydraulikzylinder von der Hydraulikpumpe 29 geförderte Hydraulikflüssigkeit gepumpt werden soll.

Bevor die Steuereinrichtung 33 die Spule 51 bestromt, überprüft sie in Abhängigkeit von einem Signal s am Eingang 55, ob ein Parameter des Bauteils 28 innerhalb eines vorbestimmten Wertebereichs liegt. Hierbei erfasst sie als den Parameter, der einen Widerstandswert R(T) des temperaturabhängigen Widerstands 49 charakterisiert, zunächst ein Potential an dem Messanschluss 35. Anschließend überprüft die Steuereinrichtung 33, ob der erfasste Parameter innerhalb eines vorbestimmten Wertebereichs liegt. Liegt der Parameter außerhalb des vorbestimmten Wertebereichs, dann erkennt die Steuereinrichtung 33, dass ein falscher Elektromotor 27 in die Hubladebühne 11 eingebaut ist und sperrt die Bestromung des Elektromotors 27, das heißt stellt sicher, dass die Spule 51 des Relais 45 nicht angesteuert wird, also stromlos bleibt. Vorzugsweise ist die Steuereinrichtung 33 so ausgebildet, dass sie den mindestens einen Parameter erfasst und überprüft, ob er im vorbestimmten Wertebereich liegt, wenn ein Benutzer der Hubladebühne 11 ein Bedienelement der Hubladebühne 11 zum Verstellen der Lage der Plattform 17 betätigt und zum Verstellen der Lage der Plattform 17 die Hydraulikpumpe (29) vom Elektromotor 27 angetrieben werden muss.

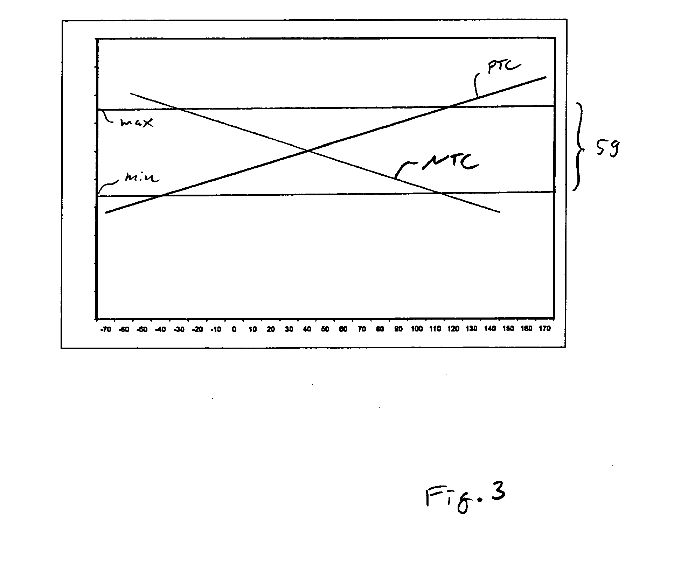

Figur 3 zeigt die Abhängigkeit des Widerstandswerts R(T) von der Temperatur des Elektromotors 27. Auf der x-Achse ist die Temperatur in Grad Celsius aufgetragen. Die y-Achse zeigt den Widerstandswert R(T) in Ohm. Bei dem temperaturabhängigen Widerstand 49 kann es sich um einen PTC oder NTC handeln. In Figur 3 ist jeweils eine entsprechend beschriftete Kennlinie eingezeichnet.

Der vorbestimmte Wertebereich ist mit dem Bezugszeichen 59 versehen. Der Wertebereich 59 ist von einer Untergrenze min und einer Obergrenze max begrenzt.

Je nach genauer Ausgestaltung der Steuereinrichtung 33 kann vorgesehen sein, dass die Steuereinrichtung 33 die erfassten Werte des Potentials am Messeingang 55 beziehungsweise an dem Messanschluss 35 zunächst in den Widerstandswert R(T) umrechnet und mit den Grenzen min, max des vorbestimmten Wertebereichs 59 vergleicht. Alternativ hierzu können anstelle der Widerstandswerte min, max auch entsprechende Werte des Potentials am Messeingang 55 in der Steuereinrichtung 33 abgelegt werden, so dass eine Umrechnung der erfassten Werte vor dem Vergleichen nicht erforderlich ist.

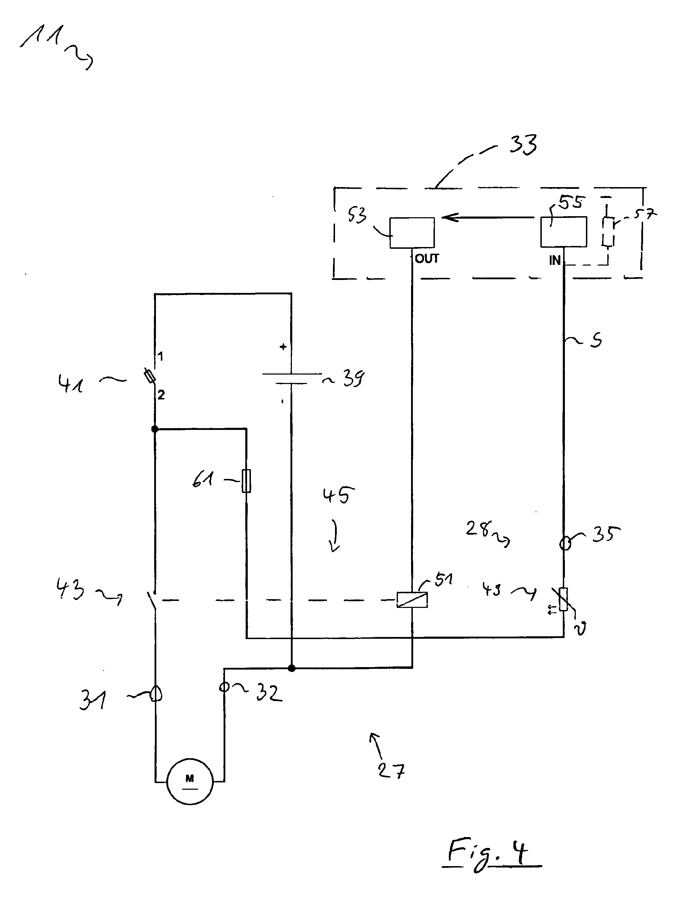

Figur 4 zeigt das Prinzipschaltbild einer weiteren Ausführungsform. Hierbei wurden für die gleichen Elemente dieselben Bezugszeichen verwendet, so dass diese nicht nochmals im Detail erläutert werden müssen. Bei dieser Ausführungsform ist ein Anschluss des temperaturabhängigen Widerstands 49 über eine weitere Sicherung 61 und die Sicherung 41 mit dem Pluspol der Batterie 39 verbunden, und der andere Anschluss des temperaturabhängigen Widerstands 49 ist an den Messanschluss 35 des Elektromotors 27 angeschlossen. Der Widerstand 57 kann zwischen dem Messeingang 55 und dem Minuspol der Batterie 39 angeordnet sein.

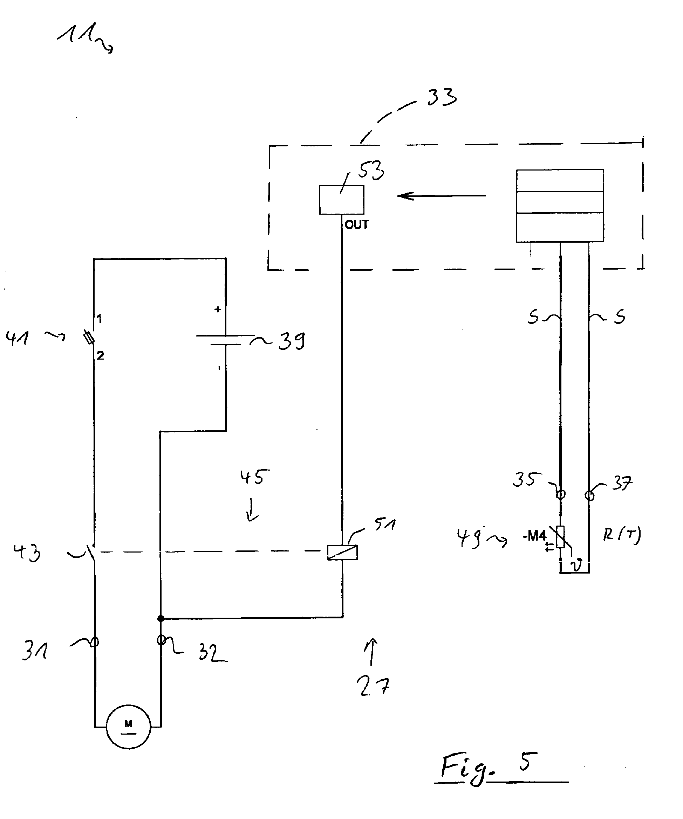

Bei einer in Figur 5 gezeigten Ausführungsform der Hubladebühne 11 sind die beiden Anschlüsse des temperaturabhängigen Widerstands 49 an gesonderte Messanschlüsse 35, 37 des Elektromotors 27 geführt. Beim Betrieb der Hubladebühne 11 gemäß dieser Ausführungsform werden störende Einflüsse, die beispielsweise von den Wicklungen des Elektromotors 27 oder einem Kommutator des Elektromotors 27 ausgehen, von dem Vorgang des Erfassens des Widerstandswerts R (T) besser ferngehalten. Es ist denkbar, die in Figur 4 gezeigte Ausführungsform so abzuwandeln, dass die Anschlüsse des in Figur 4 gezeigten temperaturabhängigen Bauteils 28 mit den zwei gesonderten Messanschlüssen 35, 37 verbunden sind. Die weitere Sicherung 61 kann im Gehäuse 30 des Elektromotors 27 angeordnet sein oder sich außerhalb des Gehäuses 30 befinden.

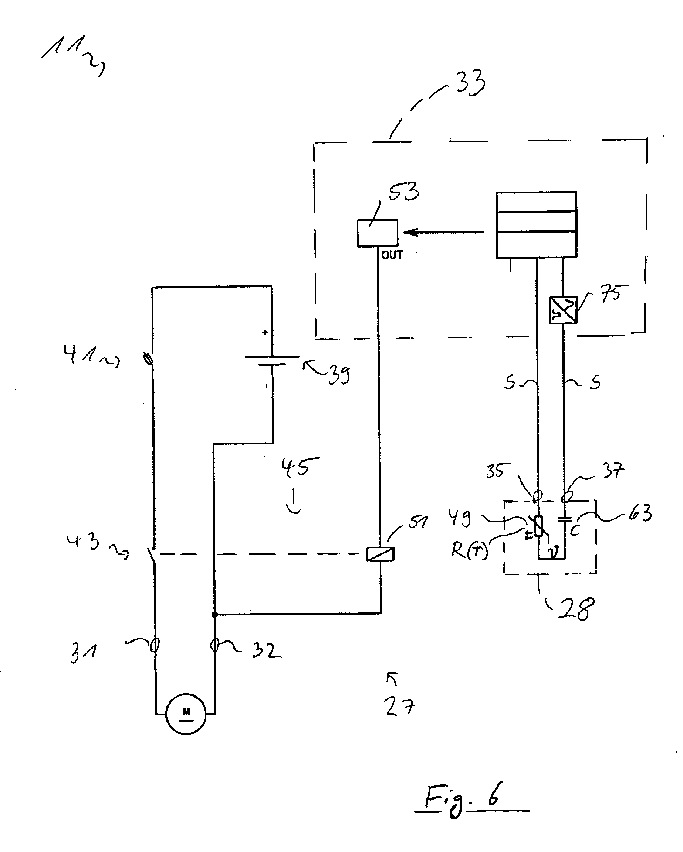

In der in Figur 6 gezeigten Ausführungsform ist anstelle des temperaturabhängigen Widerstands 49 als temperaturabhängiges Bauteil 28 eine Serienschaltung aus dem temperaturabhängigen Widerstand 49 und einem Kondensator 63 vorgesehen. Diese Serienschaltung bildet einen Zweipol, der an die beiden Messanschlüsse 35, 37 angeschlossen ist. Die Steuereinrichtung 33 weist einen Messsignalgenerator 75 zum Erzeugen eines Messsignals auf, das an das Bauteil 28 angelegt wird. Beim Betrieb der Hubladebühne 11 erzeugt die Steuereinrichtung 33 mit Hilfe des Messsignalgenerators 75 ein Messsignal und erfasst die Reaktion des Bauteils 28 auf dieses Messsignal. Zum Beispiel kann als Messsignal ein bestimmter Spannungsverlauf an das Bauteil 28 angelegt werden und der sich hierbei ergebende Strom erfasst werden. Auf diese Weise wird als erster Parameter, der Eigenschaften des Bauteils 28 charakterisiert, der Widerstandswert R(T) und als zweiter Parameter, der Eigenschaften des Bauteils 28 charakterisiert, eine Kapazität C des Kondensators 63 erfasst. Beide Parameter R(T) und C werden anschließend daraufhin überprüft, ob sie innerhalb eines ihnen zugeordneten vorbestimmten Wertebereichs liegen. Liegen beide Parameter R(T), C innerhalb der vorgegebenen Wertebereiche, dann erkennt die Steuereinrichtung 33, dass ein Elektromotor 27 des richtigen Typs in die Hubladebühne 11 eingebaut ist. Andernfalls erkennt die Steuereinrichtung 33, dass ein Elektromotor 27 des falschen Typs eingebaut ist und sperrt die Bestromung des Elektromotors 27, indem sie sicherstellt, dass die Spule 51 nicht angesteuert wird.

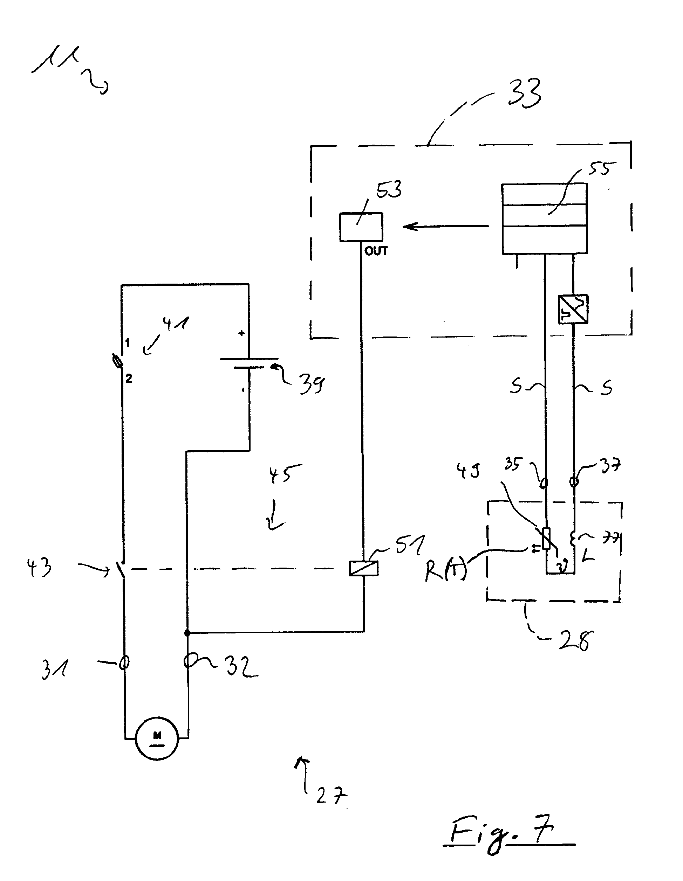

Wie in Figur 7 dargestellt, kann das Bauteil 28 auch als eine Serienschaltung aus dem temperaturabhängigen Widerstand 49 und einer weiteren Spule 77 realisiert sein. Als Parameter, die Eigenschaften des Bauteils 28 charakterisieren und somit die Identifikation des Typs des Elektromotors 27 erlauben, sind der Widerstandswert R(T) des temperaturabhängigen Widerstands 49 und die Induktivität L der weiteren Spule 77 vorgesehen. Für jeden dieser Parameter R(T) ist ein Wertebereich vorbestimmt.

Liegt einer der Parameter R(T), L außerhalb des ihm zugeordneten vorbestimmten Wertebereichs, dann erkennt die Steuereinrichtung 33, dass der Elektromotor 27 vom falschen Typ ist und verhindert die Bestromung des Elektromotors 27.

In einer nicht gezeigten Ausführungsform weist das temperaturabhängige Bauteil 28 eine Parallelschaltung aus dem temperaturabhängigen Widerstand 49 und dem Kondensator 63 auf oder ist von einer solchen gebildet. In einer weiteren nicht gezeigten Ausführungsform weist das temperaturabhängige Bauteil 28 eine Parallelschaltung aus dem temperaturabhängigen Widerstand 49 und der weiteren Spule 77 auf oder ist von einer solchen gebildet.

In einer noch weiteren nicht gezeigten Ausführungsform weist das Bauteil 28 den temperaturabhängigen Widerstand 49, den Kondensator 63 als auch die weitere Spule 77 auf. Diese können so miteinander verschaltet sein, dass das Bauteil 28 insgesamt mindestens zwei Pole, vorzugsweise genau zwei Pole, aufweist, die mit den Messanschlüssen 35, 37 verbunden sind. Beim Betrieb einer solchen Hubladebühne 11 erfasst die Steuereinrichtung 33 als Parameter, die Eigenschaften des Bauteils 28 charakterisieren, den Widerstandswert R(T), die Kapazität C und die Induktivität L und überprüft, ob diese sich innerhalb der jeweiligen vorbestimmten Wertebereiche befinden. Ist dies der Fall, dann erkennt die Steuereinrichtung 33, dass ein Elektromotor 27 des richtigen Typs in die Hubladebühne 11 eingebaut ist. Andernfalls nimmt die Steuereinrichtung 33 an, dass ein Elektromotor 27 des falschen Typs eingebaut ist und stellt sicher, dass der Elektromotor 27 nicht bestromt wird, indem sie eine Ansteuerung der Spule 51 des Relais 45 verhindert.

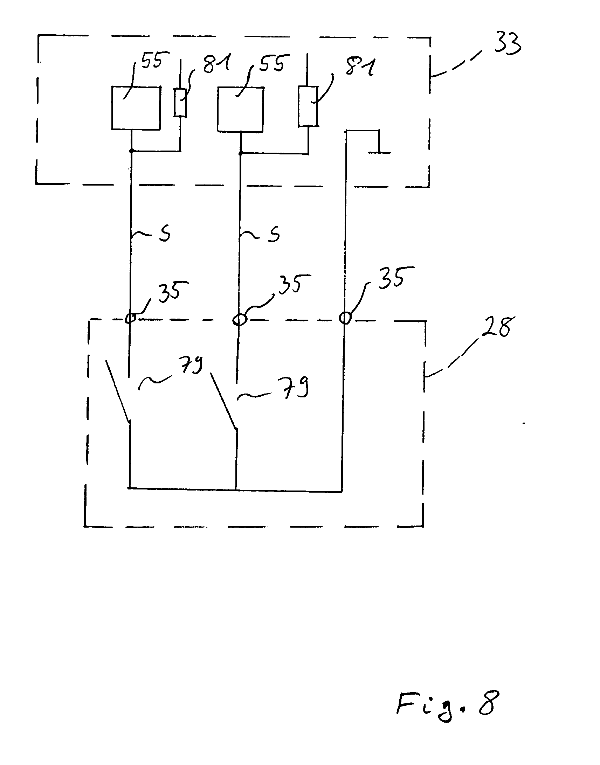

In der in Figur 8 gezeigten Ausführungsform umfasst das temperaturabhängige Bauteil 28 zwei beispielsweise als Thermoschalter 79 ausgebildete temperaturabhängige Schaltelemente. Es kann vorgesehen werden, dass die Thermoschalter schließen, wenn die Temperatur des Elektromotors 27 gleich oder größer als eine Schalttemperatur der Thermoschalter 29 ist, wobei sich die Schalttemperaturen der Thermoschalter 79 voneinander unterscheiden. Die Thermoschalter sind an die Messanschlüsse 35 des Elektromotors 27 herausgeführt, wobei ein Messanschluss 35 mit beiden Thermoschaltern 79 verbunden ist und so einen gemeinsamen Messanschluss bildet. Der gemeinsame Messanschluss 35 kann beispielsweise mit einer Masseleitung der Steuereinrichtung 33 verbunden sein. Die anderen beiden Messanschlüsse 35 sind mit den Eingängen 55, vorzugsweise mit Digitaleingängen, der Steuereinrichtung 35 verbunden. Die Steuereinrichtung 35 kann Pull-Up-Widerstände 81, die mit den beiden Eingängen 55 verbunden sind, aufweisen.

Beim Betrieb der Hubladebühne 11 überprüft die Steuereinrichtung als Parameter des Bauteils 28 die Schaltzustände der Thermoschalter 79 anhand der an den Eingängen 55 anliegenden Signale s. Bestimmte Schaltzustände entsprechen dem vorbestimmten Wertebereich. Vorzugsweise entsprechen die Schaltzustände, bei dem ein bestimmter Thermoschalter 79 geschlossen und der andere Thermoschalter 79 geöffnet ist, dem vorbestimmten Wertebereich, bei dem die Steuereinrichtung 33 die Bestromung des Elektromotors 27 zulässt.

Insgesamt stellt die vorliegende Erfindung eine Hubladebühne 11 bereit, die gegen eine Inbetriebnahme mit einem Elektromotor 27 des falschen Typs zumindest weitgehend gesichert ist und darüber hinaus eine relativ genaue Erfassung der Temperatur des Elektromotors 27 durch die Steuereinrichtung 33 erlaubt.

## Patentansprüche

1. Hubladebühne (11) für den Anbau vorzugsweise an den Heckbereich (13) eines Fahrzeugs (15), mit einer heb-und senkbaren Plattform (17), die in allen Hubstellungen in der Horizontalen haltbar ist, mit einem Hubwerk mit Tragarmen (19) für die Plattform (17) und mit einem Antrieb für das Hubwerk, wobei der Antrieb ein Hydraulikaggregat (25) mit einem Elektromotor (27) mit Versorgungsanschlüssen (31, 32) zum Antrieb einer Hydraulikpumpe (29) des Hydraulikaggregats (25) sowie eine elektrische oder elektronische Steuereinrichtung (33) umfasst, wobei der Elektromotor (27) ein temperaturabhängiges elektrisches Bauteil (28) aufweist, das mindestens ein Signal (s) über mindestens einen Messanschluss (35, 37) des Elektromotors (27) an einen Eingang (55) der Steuereinrichtung (33) kommuniziert, und dass die Steuereinrichtung (33) so ausgebildet ist, dass sie in Abhängigkeit von dem Signal (s) überprüft, ob mindestens ein temperaturabhängiger Parameter des Bauteils (28) innerhalb eines vorbestimmten Wertebereichs (59) liegt und eine Bestromung des Elektromotors (27) durch Ansteuerung eines Leistungsschalters (45) nur zulässt, wenn das Überprüfen ergibt, dass der Parameter innerhalb des Wertebereichs (59) liegt, **dadurch gekennzeichnet, dass** der Wertebereich von einer Untergrenze und einer Obergrenze begrenzt ist und von der Beschaffenheit des Bauteils abhängt, die wiederum vom Typ des zugrundegelegten Elektromotors abhängt, so dass gleichzeitig die Erkennung des Typs des Elektromotors und ein Temperaturschutz ermöglicht ist und somit auch unabhängig von der Umgebungstemperatur am Elektromotor oder der Temperatur des Elektromotors anhand des Parameters ein nicht geeigneter Elektromotor, das heißt ein Elektromotor eines für den Betrieb mit der Hubladebühne ungeeigneten Typs, erkannt und die Bestromung des Elektromotors gesperrt wird.

2. Hubladebühne nach Anspruch 1, **dadurch gekennzeichnet, dass** das temperaturabhängige Bauteil (28) einen temperaturabhängigen Widerstand (49) und/oder zwei temperaturabhängige Schaltelemente (79) umfasst.

3. Hubladebühne (11) nach Anspruch 1 oder 2, **dadurch gekennzeichnet, dass** der temperaturabhängige Widerstand (49) bzw. die temperaturabhängige Schaltelemente (79) so ausgebildet sind, dass der Parameter sich im vorbestimmten Wertebereich (59) befindet, wenn der Elektromotor (27) eine für seinen Betrieb zulässige Temperatur aufweist.

4. Hubladebühne (11) nach Anspruch 2 oder 3, **dadurch gekennzeichnet, dass** der temperaturabhängige Widerstand (49) ein NTC oder ein PTC ist.

5. Hubladebühne (11) nach einem der vorhergehenden Ansprüche, **dadurch gekennzeichnet, dass** das temperaturabhängige elektrische Bauteil (28) eine Spule (77) aufweist und dass der Parameter eine Induktivität (L) der Spule charakterisiert.

6. Hubladebühne (11) nach einem der vorhergehenden Ansprüche, **dadurch gekennzeichnet, dass** das temperaturabhängige elektrische Bauteil (28) einen Kondensator (63) aufweist und dass der Parameter eine Kapazität (C) des Kondensators (63) charakterisiert.

7. Hubladebühne (11) nach einem der vorhergehenden Ansprüche, **dadurch gekennzeichnet, dass** das temperaturabhängige Bauteil (28) ein Zweipol ist und/oder mit einem Versorgungsanschluss (31, 32) des Elektromotors (27) und mit dem Messanschluss (35) verbunden ist.

8. Hubladebühne (11) nach einem der Ansprüche 1 bis 6, **dadurch gekennzeichnet, dass** das temperaturabhängige Bauteil (28) ein Zweipol ist und/oder mit zwei verschiedenen Messanschlüssen (35, 37) des Elektromotors (27) verbunden ist.

9. Verfahren zum Betreiben einer elektrischen oder elektronischen Steuereinrichtung (33) einer Hubladebühne (11) für den Anbau vorzugsweise an den Heckbereich (13) eines Fahrzeugs (15), mit einer heb-und senkbaren Plattform (17), die in allen Hubstellungen in der Horizontalen haltbar ist, mit einem Hubwerk mit Tragarmen (19) für die Plattform (17) und mit einem Antrieb für das Hubwerk, wobei der Antrieb ein Hydraulikaggregat (25) mit einem Elektromotor (27) mit Versorgungsanschlüssen (31, 32) zum Antrieb einer Hydraulikpumpe (29) des Hydraulikaggregats (25) umfasst, wobei mindestens ein Signal (s) erfasst wird, das an einem Eingang (55) der Steuereinrichtung (33) anliegt, an den ein temperaturabhängiges elektrischen Bauteil (28) des Elektromotors (27) über mindestens einen Messanschluss (35, 37) des Elektromotors (27) das Signal (s) kommuniziert, und dass in Abhängigkeit von dem Signal (s) überprüft wird, ob mindestens ein temperaturabhängiger Parameter des Bauteils (28) innerhalb eines vorbestimmten Wertebereichs (59) liegt und eine Bestromung des Elektromotors (27) durch Ansteuerung eines Leistungsschalters (45) nur zugelassen wird, wenn das Überprüfen ergibt, dass der Parameter innerhalb des Wertebereichs (59) liegt, **dadurch gekennzeichnet, dass** der Wertebereich von einer Untergrenze und einer Obergrenze begrenzt ist und von der Beschaffenheit des Bauteils abhängt, die wiederum vom Typ des zugrundegelegten Elektromotors abhängt, so dass gleichzeitig die Erkennung des Typs des Elektromotors und ein Temperaturschutz ermöglicht ist und somit auch unabhängig von der Umgebungstemperatur am Elektromotor oder der Temperatur des Elektromotors anhand des Parameters ein nicht geeigneter Elektromotor, das heißt ein Elektromotor eines für den Betrieb mit der Hubladebühne ungeeigneten Typs, erkannt und die Bestromung des Elektromotors gesperrt wird.

10. Verfahren nach Anspruch 9, **dadurch gekennzeichnet, dass** das Signal erfasst wird und/oder überprüft wird, ob der Parameter innerhalb des vorbestimmten Wertebereichs liegt, wenn ein Bedienelement der Hubladebühne (11) zum Verstellen der Lage der Plattform (17) betätigt wird und/oder zum Verstellen der Lage der Plattform (17) die Hydraulikpumpe (29) vom Elektromotor (27) angetrieben werden muss.

11. Verfahren nach Anspruch 9 oder 10, **dadurch gekennzeichnet, dass** eine Hubladebühne (11) nach einem der Ansprüche 1 bis 8 betrieben wird.

## Claims

1. A loading lift gate (11) for mounting preferably in the back end region (13) of a vehicle (15), having a raisable and lowerable platform (17) that can be stopped in all lift positions in the horizontal, having a lifting mechanism with support arms (19) for the platform (17), and having a drive for the lifting mechanism, in which the drive includes a hydraulic assembly (25) with an electric motor (27) with supply connections (31, 32) for driving a hydraulic pump (29) of the hydraulic assembly (25) and also includes an electric or electronic control device (33), and wherein the electric motor (27) has a temperature-dependent electric component (28) which communicates at least one signal (s) to one input (55) of the control device (33) via at least one measurement connection (35, 37) of the electric motor (27), and wherein the control device (33) is embodied such that as a function of the signal (s) it monitors whether at least one temperature-dependent parameter of the component (28) is within a predetermined values range (59) and permits a supply of current to the electric motor (27), by triggering a power switch (45), only when the monitoring shows that the parameter is within the values range (59), **characterized in that** the values range is defined by a lower limit and an upper limit and depends on the nature of the component, which in turn depends on the type of fundamental electric motor, so that simultaneously, the recognition of the type of electric motor and a temperature protection are enabled, and thus also, regardless of the ambient temperature at the electric motor or the temperature of the electric motor, an unsuitable electric motor, that is, an electric motor of a type unsuitable for operation with the loading lift gate, is recognized from the parameter, and the supply of current to the electric motor is blocked.

2. The loading lift gate according to claim 1, **characterized in that** the temperature-dependent component (28) includes a temperature-dependent resistor (49) and/or two temperature-dependent switch elements (79).

3. The loading lift gate (11) according to claim 1 or 2, **characterized in that** the temperature-dependent resistor (49) and the temperature-dependent switch elements (79) are embodied such that the parameter is within the predetermined values range (59) if the electric motor (27) has a temperature that is permissible for its operation.

4. The loading lift gate (11) according to claim 2 or 3, **characterized in that** the temperature-dependent resistor (49) is an NTC or a PTC.

5. The loading lift gate (11) according to one of the foregoing claims, **characterized in that** the temperature-dependent electric component (28) has a coil (77), and that the parameter characterizes an inductance (L) of the coil.

6. The loading lift gate (11) according to one of the foregoing claims, **characterized in that** the temperature-dependent electric component (28) has a capacitor (63), and that the parameter characterizes a capacitance (C) of the capacitor (63).

7. The loading lift gate (11) according to one of the foregoing claims, **characterized in that** the temperature-dependent component (28) is a dipole and/or is connected to one supply connection (31, 32) of the electric motor (27) and to the measurement connection (35).

8. The loading lift gate (11) according to one of claims 1-6, **characterized in that** the temperature-dependent component (28) is a dipole and/or is connected to two different measurement connections (35, 37) of the electric motor (27).

9. A method for operating an electric or electronic control device (33) of a loading lift gate (11) for mounting preferably in the back end region (13) of a vehicle (15), having a raisable and lowerable platform (17) that can be stopped in all lift positions in the horizontal, having a lifting mechanism with support arms (19) for the platform (17), and having a drive for the lifting mechanism, in which the drive includes a hydraulic assembly (25) with an electric motor (27) with supply connections (31, 32) for driving a hydraulic pump (29) of the hydraulic assembly (25), and wherein at least one signal (s) is detected, which is present at an input (55) of the control device (33) to which a temperature-dependent component (28) of the electric motor (27), via at least one measurement connection (35, 37) of the electric motor (27), communicates the signal (s), and wherein as a function of the signal (s) it is monitored whether at least one temperature-dependent parameter of the component (28) is within a predetermined values range (59) and permits a supply of current to the electric motor (27), by triggering a power switch (45), only when the monitoring shows that the parameter is within the values range (59), **characterized in that** the values range is defined by a lower limit and an upper limit and depends on the nature of the component, which in turn depends on the type of fundamental electric motor, so that simultaneously, the recognition of the type of electric motor and a temperature protection are enabled, and thus also, regardless of the ambient temperature at the electric motor or the temperature of the electric motor, an unsuitable electric motor, that is, an electric motor of a type unsuitable for operation with the loading lift gate, is recognized from the parameter, and the supply of current to the electric motor is blocked.

10. The method according to claim 9, **characterized in that** the signal is detected and/or monitored for whether the parameter is within the predetermined values range if a user control element of the loading lift gate (11) is actuated for adjusting the position of the platform (17), and/or if the hydraulic pump (29) has to be driven by the electric motor (27) for adjusting the position of the platform (17).

11. The method according to claim 9 or 10, **characterized in that** a loading lift gate (11) according to one of claims 1-8 is operated.

## Revendications

1. Hayon élévateur de chargement (11) destiné à être rapporté de préférence au niveau de la zone arrière (13) d'un véhicule (15), comprenant une plateforme (17) pouvant être soulevée et abaissée et être maintenue à l'horizontale dans toutes les positions de levage, le hayon comprenant également un groupe de levage avec des bras porteurs (19) pour la plateforme (17) et un moyen d'entraînement pour le groupe de levage, hayon élévateur
dans lequel le moyen d'entraînement comprend un groupe hydraulique (25) avec un moteur électrique (27) présentant des bornes d'alimentation (31, 32) pour l'entraînement d'une pompe hydraulique (29) du groupe hydraulique (25), ainsi qu'un dispositif de commande (33) électrique ou électronique,
dans lequel le moteur électrique (27) comprend une pièce électrique (28) sensible à la température, qui communique au moins un signal (s), par l'intermédiaire d'au moins une borne de raccordement de mesure (35, 37) du moteur électrique (27), à une entrée (55) du dispositif de commande (33),
et dans lequel le dispositif de commande (33) est conçu de manière à vérifier, en fonction du signal (s), si au moins un paramètre fonction de la température, de la pièce (28), se situe à l'intérieur d'une plage de valeurs (59) prédéterminée, et de façon à n'autoriser une alimentation en courant du moteur électrique (27) par la commande d'un commutateur de puissance (45), que lorsque le résultat de la vérification conclut à un paramètre situé à l'intérieur de ladite plage de valeurs (59),
**caractérisé en ce que** la plage de valeurs est délimitée par un seuil inférieur et un seuil supérieur, et dépend de la nature de ladite pièce, qui pour sa part dépend du type du moteur électrique pris en considération, de sorte que l'on rend simultanément possible la reconnaissance du type du moteur électrique et une protection thermique, en permettant ainsi également, indépendamment de la température environnante au niveau du moteur électrique ou de la température du moteur électrique, de reconnaître, à l'aide du paramètre, un moteur électrique non approprié, c'est-à-dire un moteur électrique d'un type non approprié au fonctionnement avec le hayon élévateur de chargement, et de bloquer l'alimentation en courant du moteur électrique.

2. Hayon élévateur de chargement selon la revendication 1, **caractérisé en ce que** la pièce (28) sensible à la température comprend une résistance (49) sensible à la température et/ou deux éléments de commutation (79) sensibles à la température.

3. Hayon élévateur de chargement (11) selon la revendication 1 ou la revendication 2, **caractérisé en ce que** la résistance (49) sensible à la température, ou les éléments de commutation (79) sensibles à la température, sont conçus de manière à ce que le paramètre se situe dans la plage de valeurs (59) prédéterminée lorsque le moteur électrique (27) présente une température admissible pour son fonctionnement.

4. Hayon élévateur de chargement (11) selon la revendication 2 ou la revendication 3, **caractérisé en ce que** la résistance (49) sensible à la température est une CTN (thermistance à *Coefficient de Température Négatif)* ou une CTP (thermistance à *Coefficient de Température Positif).*

5. Hayon élévateur de chargement (11) selon l'une des revendications précédentes, **caractérisé en ce que** la pièce électrique (28) sensible à la température comprend une bobine (77), et **en ce que** le paramètre caractérise une inductance (L) de la bobine.

6. Hayon élévateur de chargement (11) selon l'une des revendications précédentes, **caractérisé en ce que** la pièce électrique (28) sensible à la température comprend un condensateur (63), et **en ce que** le paramètre caractérise une capacité (C) du condensateur (63).

7. Hayon élévateur de chargement (11) selon l'une des revendications précédentes, **caractérisé en ce que** la pièce (28) sensible à la température est un dipôle et/ou est reliée à une borne d'alimentation (31, 32) du moteur électrique (27) et à la borne de raccordement de mesure (35).

8. Hayon élévateur de chargement (11) selon l'une des revendications 1 à 6, **caractérisé en ce que** la pièce (28) sensible à la température est un dipôle et/ou est reliée à deux bornes de raccordement de mesure (35, 37) différentes du moteur électrique (27).

9. Procédé pour faire fonctionner un dispositif de commande (33) électrique ou électronique d'un hayon élévateur de chargement (11) destiné à être rapporté de préférence au niveau de la zone arrière (13) d'un véhicule (15), comprenant une plateforme (17) pouvant être soulevée et abaissée et être maintenue à l'horizontale dans toutes les positions de levage, le hayon comprenant également un groupe de levage avec des bras porteurs (19) pour la plateforme (17) et un moyen d'entraînement pour le groupe de levage, le moyen d'entraînement comprenant un groupe hydraulique (25) avec un moteur électrique (27) présentant des bornes d'alimentation (31, 32) pour l'entraînement d'une pompe hydraulique (29) du groupe hydraulique (25), procédé
selon lequel on relève au moins un signal (s), qui est présent à une entrée (55) du dispositif de commande (33), à laquelle une pièce électrique (28) sensible à la température du moteur électrique (27) communique le signal (s), par l'intermédiaire d'au moins une borne de raccordement de mesure (35, 37) du moteur électrique (27), et
selon lequel on vérifie, en fonction du signal (s), si au moins un paramètre fonction de la température, de la pièce (28), se situe à l'intérieur d'une plage de valeurs (59) prédéterminée, et une alimentation en courant du moteur électrique (27) par la commande d'un commutateur de puissance (45), n'est autorisée que lorsque le résultat de la vérification conclut à un paramètre situé à l'intérieur de ladite plage de valeurs (59),
**caractérisé en ce que** la plage de valeurs est délimitée par un seuil inférieur et un seuil supérieur, et dépend de la nature de ladite pièce, qui pour sa part dépend du type du moteur électrique pris en considération, de sorte que l'on rend simultanément possible la reconnaissance du type du moteur électrique et une protection thermique, en permettant ainsi également, indépendamment de la température environnante au niveau du moteur électrique ou de la température du moteur électrique, de reconnaître, à l'aide du paramètre, un moteur électrique non approprié, c'est-à-dire un moteur électrique d'un type non approprié au fonctionnement avec le hayon élévateur de chargement, et de bloquer l'alimentation en courant du moteur électrique.

10. Procédé selon la revendication 9, **caractérisé en ce que** l'on relève le signal et/ou l'on vérifie si le paramètre se situe à l'intérieur de la plage de valeurs prédéterminée, lorsqu'un élément de manoeuvre du hayon élévateur de chargement (11) pour régler la position de la plateforme (17) est actionné, et/ou lorsque pour régler la position de la plateforme (17), la pompe hydraulique (29) doit être entraînée par le moteur électrique (27).

11. Procédé selon la revendication 9 ou la revendication 10, **caractérisé en ce que** l'on fait fonctionner un hayon élévateur de chargement (11) selon l'une des revendications 1 à 8.
